# EUROPEAN PATENT APPLICATION

(11) **EP 3 653 871 A1**
(43) Date of publication of application: **20.05.2020**
(21) Application number: 18206288.5
(22) Date of filing: 14.11.2018
(51) Int. Cl.: F03D 1/06

(54) **COUPLING ARRANGEMENT**

(71) Applicant: Winfoor AB, 227 64 Lund (SE)
(72) Inventor: WÄRN, Per, 597 30 Åtvidaberg (SE); RUBIN, Pascal, 226 46 Lund (SE); BERTHILSSON, Rikard, 244 60 Furulund (SE)
(74) Representative: AWA Sweden AB

(57) **Abstract**

The disclosure relates to a coupling arrangement (700) for connecting a wing member (107) of a wind turbine rotor blade (104) to an interconnecting member (600). The wing member (107) has a longitudinal extension L and the wing member (107) comprises a tubular end portion (120 at a free end thereof. The coupling arrangement (700) comprises a plurality of through-going holes (721, 133), each hole extending through a wall of the tubular end portion (120); a plurality of anchoring members (710), each being arranged to extend through a respective through-going hole (721, 133), and each being provided with a receiving hole (711) having a longitudinal extension aligned with the longitudinal extension L of the wing member (107) and facing the free end of the wing member (107); and a plurality of longitudinally extending channels (140), each channel extending from the free end of the wing member (107) to a respective receiving hole (711). The disclosure also relates to a system comprising such coupling arrangement, and also to a wind turbine rotor blade (104) using such system.

## Description

### Field of invention

The invention relates to a coupling arrangement for connecting a wing member of a wind turbine rotor blade to an interconnecting member, and a system to be used in a wind turbine rotor blade. Further, the invention relates to a wind turbine rotor blade comprising a first section of a wind turbine rotor blade.

### Technical Background

There is a growing interest in renewable energy technologies throughout the world. For instance, climate change concerns are driving energy production to renewable energy technologies. Wind power is therefore an important energy source and the amount of power produced annually through wind power is growing rapidly.

Wind power is the conversion of wind energy into more useful forms, such as electricity. In this regard, use is made of a wind turbine, which is a device that converts kinetic energy from the wind into electrical power. A wind turbine comprises a rotor having a central hub, to which one or more blades are attached. The rotor is arranged to rotate as the blades are subjected to a mass of air passing the wind turbine due to a blowing wind. The rotation of the rotor thus generates mechanical energy that may be converted to electrical power in the wind turbine.

There are two main types of wind turbines, horizontal-axis wind turbines (HAWT), wherein the blades rotate about a horizontal axis, and vertical-axis wind turbines (VAWT), wherein the blades rotate about a vertical axis. The far most common type of wind turbine for large-scale power production is the HAWT and the discussion below is mainly directed to HAWTs.

The blades are formed with an airfoil-shaped cross-section. This implies that the blades are formed such that the surface at the leading side in the rotational direction of the blade causes the air passing the surface to take a longer path than the air passing the surface at the trailing side. Hence, the air passing over the surface at the leading side will travel faster than the air passing over the surface at the trailing side. Therefore, a difference in pressure is formed, resulting in a lift force on the blade. This lift force induces a torque about a rotor axis which causes the rotor to rotate.

The relative flow velocity, including speed and direction, between a moving blade and the air is called the apparent flow velocity. As air passes the surface of an airfoil shaped blade, it exerts a force on it that depends on the apparent flow velocity and the shape of the airfoil. Lift force is the component of the force that is perpendicular to the oncoming apparent flow direction. It contrasts with the drag force, which is the component of the force parallel to the apparent flow direction. Contrary to the lift force, the drag force tends to counteract the movement of the blade and it can be shown through mathematical analysis that in order to optimize the power efficiency of the turbine, the blade should be designed so as to maximize the ratio between the lift force and the drag force.

The power production capacity of a wind turbine is mainly affected by the length of the blades. The power generated by a wind turbine is proportional to the area swept by the blades, which is typically proportional to the square of the length of the blades. Hence, an increased length of the blades enables an increased power production of the wind turbine.

However, the blades also need to be designed with the loads encountered by the blades during operation of the wind turbine in mind. Aerodynamic loads are formed by means of the wind and the rotation of the blade in the air giving rise to the apparent flow. The aerodynamic loads cause a bending moment on the blade, which is largest closest to the hub. While the aerodynamic loads may vary due to wind turbulence, the aerodynamic loads exerted on the blades are typically proportional to the square of the length of the blades.

The blades are also exerted to gravity loads due to the mass of the blade, and as the blade rotates a full circle, the blade will go through a fatigue cycle. The gravity loads are typically proportional to the cube of the length of the blade. Therefore, although the aerodynamic loads are dominating for small-size blades, the gravity loads will become dominating as the length of the blades increases.

Thus, as the length of the blades is increased in order to increase the power production capacity of wind turbines, the blades need to be designed with a close attention to gravity loads exerted on the blades. Otherwise, there is a risk of fatigue failure due to the large mass of the blade. Furthermore, long blade will lead to problems concerning deformations, cracks and torsions of the blades. Hence, design of the blade becomes difficult as the length of the blade increases.

The mass of the blade and the associate gravity loads, as well as the aerodynamic loads, may force the design of the shape of the blade to be a compromise between strength and aerodynamics. In particular close to the hub, the blade may need to have a design which is optimized for providing strength rather than airfoil characteristics, which implies that the aerodynamic properties of the blade will not be optimal.

Further, when the wind turbine is to be installed, the wind turbine parts need to be transported to the site of the wind turbine. The wind turbine consists of very large parts, such as the long blades, which makes transportation of the parts to the site a difficult task. For instance, the wind turbine parts may be much longer than the usually allowed length of vehicles, which implies that special vehicles need to be used for transportation of the parts on land. Further, the mass of the wind turbine parts may also set special requirements in order to allow transportation of the parts to the site. Also, installation of the parts on the site is cumbersome due to the mass and length of the parts.

Also, the cost of the blade of course increases with the mass of the blade. Since the mass of the blade is proportional to the cube of the length of the blade, the costs of manufacturing a blade increases more rapidly with the length of the blade than the power production capacity of the wind turbine.

Finally, a large mass of the blade may cause problems with tower and foundation of the wind turbine, as large loads are exerted on these parts of the wind turbine by the mass of the blade. Also, the increased mass of the blade causes increased loads on the rotor hub by means of the increased rotational inertia.

It is clear from the above that any modification of blades of wind turbines, such that the mass of the blades is decreased would significantly improve problems faced in design of the blades.

WO 2016/048221 discloses a blade for a rotor of a wind turbine. The blade is divided into a number of sections arranged one after the other along the longitudinal extension of the blade. Each section comprises two plate shaped connectors and a plurality of longitudinal airfoil-shaped strut members extending between the connectors and along the longitudinal extension of the section. Further, a plurality of diagonal strut members extend from a connection point between a first longitudinal strut member and a first connector to a connection point between a second longitudinal strut member and a second connector. Thereby a light-weight truss-like three-dimensional structure is formed.

WO 2014/056507 discloses a joined blade assembly. The joined blade assembly comprises two or more blades in different planes that are connected to each other by one or more brace systems. The brace system comprises at least one brace strut/link that extends between the blades. The blades in the joined blade assembly may be divided into segments. In case of the blades being segmented this is bade by using a brace connection point in the form of a hinged or fixed joint that connects two adjacent blade segments and at least one brace strut/link.

### Summary of invention

In summary, as discussed above, as the length of the rotor blades is increased in order to increase the power production capacity of wind turbines, the blades need to be designed with a close attention to strength, weight, ability to transportation and also an easy assembly.

It is therefore an overall object of the invention to provide a stable, light weight wind turbine rotor blade.

It is a specific object of the invention to provide a coupling arrangement that allows an easy and high-strength interconnection between two adjacent sections in case of the wind turbine rotor blade being divided into two or more sections as seen in the longitudinal extension of the rotor blade, or between two or more wing members extending along each other, at a distance from each other, and along a longitudinal direction of the wind turbine rotor blade.

Another object is to provide a coupling arrangement that is applicable to interconnect parts of different materials such as one part of a fiber reinforced polymer material and one part of metal. The coupling arrangement should also be applicable in the event all parts are made of metal.

Yet another object is to provide connector arrangement that is applicable to interconnect at least one wing member with two or more struts or the like and/or with diagonal frame members.

These and other objects of the invention are at least partly met by the invention as defined in the independent claims. Preferred embodiments are set out in the dependent claims.

According to an aspect of the invention, there is provided a coupling arrangement for connecting a wing member of a wind turbine rotor blade to an interconnecting member, the wing member having a longitudinal extension L and the wing member comprising, at a free end thereof, a tubular end portion, and wherein the coupling arrangement comprises:
a plurality of through-going holes, each hole extending through a wall of the tubular end portion;
a plurality of anchoring members, each being arranged to extend through a respective through-going hole, and each being provided with a receiving hole having a longitudinal extension aligned with the longitudinal extension L of the wing member and facing the free end of the wing member; and
a plurality of longitudinally extending channels, each channel extending from the free end of the wing member to a respective receiving hole.

Accordingly, a coupling arrangement is provided that allows a first wing member having a tubular end portion to be interconnected with a second wing member, where the second wing member is arranged along an axial directional coinciding with the longitudinal extension of the first wing member.

The coupling arrangement allows a tubular cross section to be connected to another part without using a traditional bolted flange joint. Instead, the coupling arrangement comprises a plurality of channels extending in and along the walls of the tubular end portion. The walls of the tubular end portion may, if necessary, be provided with locally thicker material to be able to accommodate the longitudinally extending channels and the plurality of through-going holes.

The through-going holes extending transverse the longitudinal direction of the wing member are configured to receive and support a plurality of anchoring members configured to extend through a respective through-going hole while being subjected to a pulling force in the longitudinal direction. More precisely, since each anchoring member is provided with a receiving hole having a longitudinal extension aligned with the longitudinal extension of the bolt receiving channels and also facing the free end of the tubular end portion, the bolts that are used to interconnect the first wing member with a second wing member will extend into the tubular end portion and lockingly engage a respective receiving hole in an anchoring member. The pulling force applied by the bolts will thereby be distributed directly to the anchoring members. Depending on the position of the bolt receiving channels, as seen in a direction transverse the longitudinal direction of the wing member, the pulling force may be distributed more or less fully along a longitudinal center line of the respective wall portion of the tubular end portion, i.e. where the strength is the highest. Accordingly, a coupling arrangement is provided that allows a high strength connection between a wing member of a wind turbine blade and an interconnecting member. Provision of a high strength connection is of special importance when it comes to wind turbine blades which inherently are subjected to high bending and torsional forces by the wind and which wind turbine blades often are made of a fibre reinforced polymer material. The coupling arrangement is applicable no matter if the tubular end portion is made of a metal material, such as steel, or a fibre reinforced polymer material.

The coupling arrangement is easy to handle on an installation site since at least some of the parts, such as the anchoring members may be pre-assembled during manufacturing of the wing member.

The coupling arrangement may further comprise:
an inner support member having a longitudinal extension, coinciding with the longitudinal extension of the wing member, and a transversal extension, and being arranged to abut an inner surface of the tubular end portion of the wing member;
an outer support member having a longitudinal extension, coinciding with the longitudinal extension of the wing member, and a transversal extension, and being arranged to abut an outer surface of the tubular end portion of the wing member; wherein
each hole of the plurality of through-going holes extends through the outer support member, the wall of the tubular end portion and the inner support member.

Accordingly, the wall portions of the tubular free end portion of the wing member are reinforced with supporting members abutting the inner and outer walls of the tubular member. Thereby a sandwich structure with a locally increased thickness is formed by the two supporting members and the intermediate wall portion of the tubular end portion. This provides an overall reinforcement of the tubular end portion which allows a better resistance against torsional and bending forces which inevitably will be applied by the wind to the wind turbine blade and its wing members during use.

The sandwich structure may be provided as a locally thicker material that allows a tubular cross section to be connected to another part without using a traditional bolted flange joint. The sandwich structure allows forming of bolt receiving channels having an extension in the longitudinal direction of an otherwise thin walled tubular end portion. Further, the locally increased thickness provided by the sandwich structure allows provision of through-going holes extending transverse the longitudinal direction of the wing member which holes may receive and support a plurality of anchoring members configured to extend through a respective through-going hole while being subjected to a pulling force in the longitudinal direction. Accordingly, a coupling arrangement is provided that allows a high strength connection between a wing member of a wind turbine blade and an interconnecting member. The inner and outer support members and the anchoring members may be pre-assembled during manufacturing of the wing member.

Each longitudinally extending channel may comprise an inner envelope surface, wherein the inner envelope surface may be:
defined by the material in the wall of the tubular end portion;
defined by a slot in a longitudinally extending wall portion of the tubular end portion; or
defined partly by a groove in the longitudinally extending exterior or inner wall portion of the tubular end portion and partly by a groove in the longitudinally
   extending wall portion of either the outer support member or the inner support member; or
defined by a slot in the longitudinally extending wall portion of the tubular end portion, by a groove in the longitudinally extending wall portion of the outer support member and by a longitudinally extending wall portion of the inner support member.

Accordingly, each longitudinally extending channel may be defined by the material in the tubular end portion only, or by a combination of the material in the tubular end portion and the material in one or both of the inner and outer support members. No matter how the channels are formed, it is preferred that the cross sections of the channels exceed the cross sections of the receiving holes in the anchoring members and also exceed the cross sections of bolts configured to extend there through. Thereby there will be no transfer of load from the bolts to the sandwich structure or to the tubular end portion along the channels in a direction transverse to the longitudinal extension of the wing member. Instead, the load from the bolts will be transferred to the anchoring members. The geometrical cross section of the longitudinally extending channel may be arbitrary.

The tubular end portion may be made of a fibre reinforced polymer based material. Each of the inner support member and the outer support member may be made of a fibre reinforced polymer based material. The fibres used may by way of example be carbon fibres or glass fibres. The polymer based material used in the tubular end portion is preferably the same or at least chemically compatible with the polymer based material used in the inner and outer support members.

Alternatively, the tubular end portion and the inner and outer support members may be made of a metal material, such as steel. In case of metal, the support members may be welded to the tubular end portion.

Each of the inner support member and the outer support member may be configured to be mounted to the tubular end portion by using an adhesive. The provision of a strong adhesive bonding may be facilitated by using one and the same polymer based material in the tubular member and in the inner and outer support members.

The receiving holes may be threaded. Thereby a locking engagement with the bolts may easily be provided for.

A coupling arrangement may be arranged on at least two opposing side wall portions of the tubular end portion. No matter geometrical cross section of the tubular end portion, it is preferred that the coupling arrangements are symmetrically arranged. By way of example, in the case of the tubular end portion having a quadrangular cross section, the coupling arrangements are preferably arranged on two opposing side walls of the tubular end portion, and even more preferred on all four side walls. In the case of a rectangular cross section, it is preferred that the coupling arrangements are arranged at least on the long sides thereof. In the case of a circular cross section it is preferred that the coupling arrangements are arranged on two diametrically opposing side wall portions or are symmetrically distributed along the circumference.

The inner support member and the outer support member may each have a surface extension complementary to at least a portion of a surface extension of the tubular end portion. By way of example, in the event of a quadrangular cross section of the tubular end portion, the support members should be flat. Correspondingly, in the event of a circular or otherwise curved cross section, the support members should have a complementary curvature. Thereby a close abutment between the tubular end portion and the inner and outer support members may be provided.

According to another aspect, a system to be used in a wind turbine rotor blade is provided. The system comprises:
a coupling arrangement in line with the features described above;
an interconnecting member comprising a connecting portion having an extension transverse the longitudinal extension of the wing member, and a plurality of through-going holes, each hole having a longitudinal extension aligned with a respective receiving hole in the anchoring members; and
a plurality of bolts, each configured to extend from the connecting portion, through a respective longitudinally extending channel and into a locking engagement with the respective receiving hole in the anchoring members.
The interconnecting member and the coupling arrangement may by way of example form parts of a modular wing member. In another example, the interconnecting member may form part of a second wing member to be connected to a first wing member being provided with a connector.

As previously discussed, the coupling arrangement forms a sandwich structure comprising two supporting members and the intermediate wall portion of the tubular end portion. The technical effects resulting from the coupling arrangement have been thoroughly discussed above and are equally applicable when applied in a system in which such coupling arrangement is an integral part. To avoid undue repetition, reference is made to the discussion above.

It is preferred that that there is a radial clearance between the plurality of bolts and the plurality of through-going holes in the connecting portion of the interconnecting member, and between the plurality of bolts and the plurality of channels in the coupling arrangement, which channels extend from the free end of the wing member to a respective receiving hole in an anchoring member. By the radial clearance, the bolts will directly engage the anchoring members and their receiving holes. Thereby there will be no transfer of load from the bolts to the sandwich structure along the extension of the channels but only to the anchoring members.

The interconnecting member may be made of metal. The interconnecting member may be casted as a unitary body or be composed of two or more parts joined by welding and/or bolting.

The interconnecting member may comprise a first elongated portion extending along the longitudinal extension of the wing member, and wherein the connecting portion is arranged at a free end of the first elongated portion and wherein the first elongated portion on an opposite end thereof comprises an engagement portion configured to directly or indirectly support a connector.

The interconnecting member may further comprise a second elongated portion aligned with the first elongated portion, and wherein a second connecting portion is arranged at a free end of the second elongated portion opposite the first connecting portion, wherein the engagement portion is arranged between the first elongated portion and the second elongated portion, and wherein the first elongated portion is configured to interact with a first wing member and the second elongated portion is configured to interact with a second wing member.

The surface extensions of the first and the second connecting portions may form an angle in view of each other as seen in a plane extending transverse the longitudinal extension of the wind turbine blade. Thereby the cross section of a wing member connected to the first connecting portion will, as seen along the longitudinal direction of the wing member, have an orientation that differs from the orientation of the cross section of a second wing member connected to the second connecting portion. Thereby wing members of a first section of a wind turbine blade may be provided with different airfoil properties such as different angles of attack than wing members of a second adjacent section.

According to yet another aspect, a wind turbine rotor blade comprising a first section of a wind turbine rotor blade is provided, wherein the first section comprises three or more wing members extending along each other, at a distance from each other, and along a longitudinal direction of the wind turbine rotor blade, wherein at least one, and preferably each, wing member has an airfoil shaped cross-section as seen in a plane transverse to the longitudinal extension of the wing member, wherein each wing member extends from a respective inner end to a respective outer end, and further comprises a system according to any of the features discussed above interconnecting the wing member to an associated wing member of a second section of the wind turbine rotor blade or to a hub of a wind turbine.

The technical effects resulting from the coupling arrangement forming part of the system have been thoroughly discussed above and are equally applicable when applied in a wind turbine rotor blade. To avoid undue repetition, reference is made to the discussion above.

By designing the wind turbine rotor blade with three or more wing members and by using struts or frames extending between the respective wing members it is possible to reduce both production cost and transportation cost, while allowing rotor blades to be longer, stronger and lighter than what is possible today. The wing members may be provided as separate members. Thereby production cost and transportation cost may be reduced. Smaller and less costly production methods may be used since the wings only forms a portion of the total length of the wings of the rotor blade. Moreover, since the rotor blade comprises three or more wings each wing and wing member may have a smaller cross-section than traditional single wing blades. The wind turbine rotor blade section and the wind turbine rotor blade will have a truss-like frame structure making it possible to achieve a rotor blade to be longer, stronger and lighter than what is possible today. This also contributes to allowing for more cost effective production and transportation. It is e.g. possible to design the rotor blade such that the wing members fit into a standardised shipment container.

According to an alternative aspect of the invention, a coupling arrangement for connecting a wing member of a wind turbine rotor blade to an interconnecting member is provided, the wing member having a longitudinal extension and comprising an end portion at a free end thereof, said end portion having, as seen along the longitudinal extension, at least one portion having an undulation, or having a cross-sectional area being locally reduced or locally enlarged,
and wherein the interconnecting member, as seen along a plane extending along the longitudinal centreline of the wing member, comprises a first half comprising a first recess and a second half comprising a second recess, and wherein the first recess and the second recess in a condition when the first and second halves are moved together into a position where the first and second recesses are arranged to encircle at least a portion of the undulated end portion of the wing member or at least a portion of the end portion having a locally reduced or locally enlarged cross-sectional area, thereby preventing the wing member from being separated from the interconnecting member along the longitudinal direction of the wing member.

The first and second halves may be clamped together, e.g. by using two or more bolts.

The end portion of the wing portion may be tubular.

The first and second recesses, as seen in a condition when the first half and the second half are moved together, may define a cavity with an inner wall portion being, as seen along the longitudinal extension, complementary to an outer wall portion of the end portion of the wing member.

The first and second halves may each comprise a plurality of through-going holes extending in a direction transverse to the longitudinal extension of the wing member, and wherein the plurality of through-going holes are configured to receive bolts extending there through.

The end portion of the wing member may be made of a fibre reinforced polymer based material, and the interconnecting member may be made of metal. Alternatively, the wing member and the interconnecting member may both be made of metal or by a fibre reinforced polymer based material.

An inner reinforcement may be provided along the tubular end portions of the respective wing members. The inner reinforcement may be used to prevent buckling of the tubular end portions.

The interconnecting member may further comprise an engagement portion configured to directly or indirectly support a connection member, and wherein the interconnecting member has a mirrored configuration extending on an opposite side of a virtual plane, said virtual plane extending through the engagement portion and transverse to the longitudinal extension of the wing member.

The connection member may comprise one or more lugs.

According to yet another alternative aspect, a wind turbine rotor blade is provided. The wind turbine rotor blade comprises a first section of a wind turbine rotor blade, the first section comprising:
three or more wing members extending along each other, at a distance from each other, and along a longitudinal direction of the wind turbine rotor blade,
wherein at least one, and preferably each, wing member has an airfoil shaped cross-section as seen in a plane transverse to the longitudinal extension of the wing member,
wherein each wing member extends from a respective inner end to a respective outer end, and further comprises a coupling arrangement according to the alternative aspect given above to interconnect a wing member of the first section to an associated wing member of a second section of the wind turbine rotor blade.

### Brief description of the drawings

The invention will by way of example be described in more detail with reference to the appended schematic drawings, which shows presently preferred embodiments of the invention.
Fig. 1 shows the general overview of a wind turbine.
Fig. 2 shows a wind turbine rotor blade comprising three wing members.
Fig. 3 shows a section of the wind turbine rotor blade of Fig.2.
Fig. 4 shows one embodiment of a frame used to interconnect wing members.
Fig. 5 shows in greater detail one embodiment of a system for connecting a wing member of a first section with a wing member of a second section.
Fig. 6 shows an exploded view of the coupling arrangement.
Figs. 7A-7C discloses highly schematically different ways of forming longitudinally extending channels.
Fig. 8 discloses the coupling arrangement of Fig. 6 in an assembled condition.
Fig. 9 discloses an alternative embodiment of the coupling arrangement.
Fig. 10 discloses a second embodiment of an interconnecting member.
Fig. 11 discloses an exploded view a third embodiment for connecting a wing member of a wind turbine rotor blade to an interconnecting member.
Fig. 12 discloses the third embodiment of Fig. 11 in a mounted condition.
Figs. 13 and 14 discloses one embodiment of a connector.
Fig. 15 discloses a cross section of an embodiment of a connector interconnecting tubular end portions of two wing members.

### Detailed description of preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

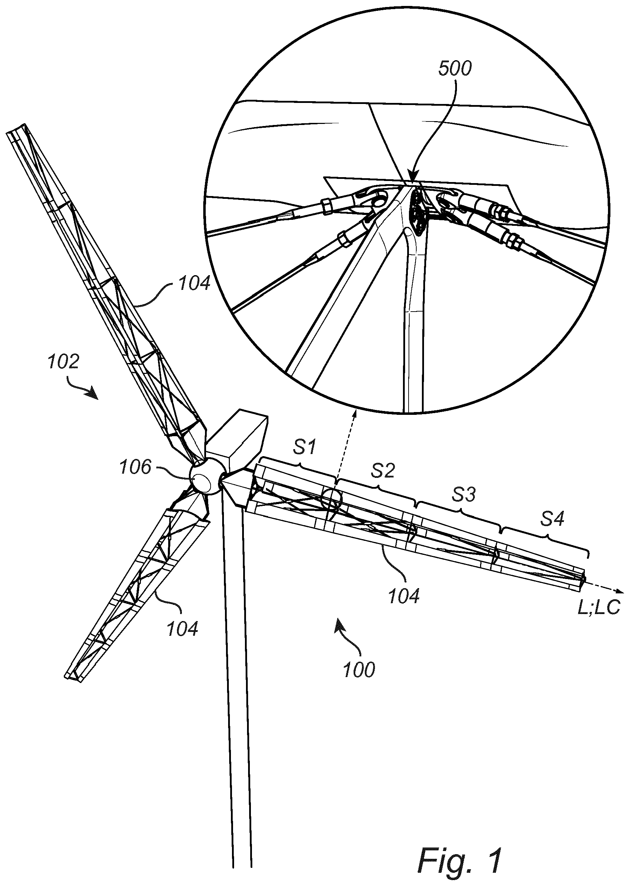

Fig. 1 shows a wind turbine 100 in the form of a horizontal-axis wind turbine type (HAWT). The wind turbine 100 comprises a rotor 102 having a central hub 106 to which truss-like wind turbine blades 104 are attached. In the preferred embodiment, the rotor 102 comprises three rotor blades 104. However, it is conceivable to use a different number of rotor blades 104, such as two rotor blades or more than three rotor blades 104.

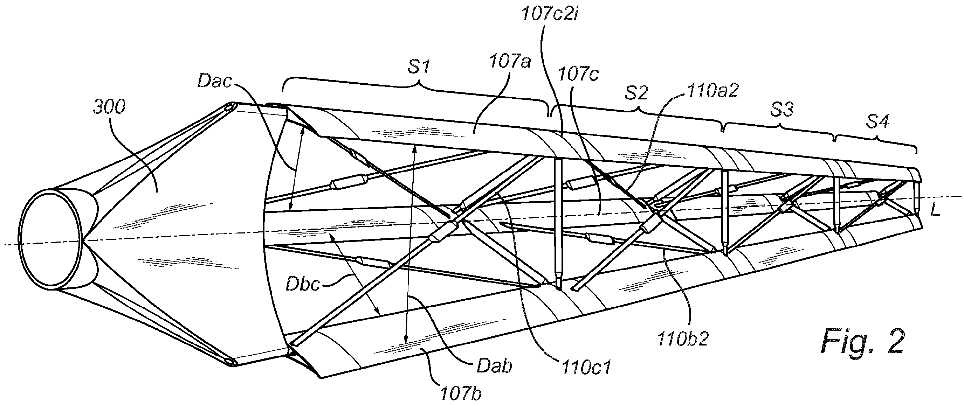

In Fig. 2, a wind turbine rotor blade 104 is disclosed in more detail. Each wind turbine rotor blade 104 comprises three wing members 107a-c, each extending along the longitudinal direction L of the wind turbine rotor blade 104. The wing members 107a-c extend along each other and at a distance Dac, Dab, and Dbc from each other. In the preferred embodiment, the rotor blade 104 comprises three wing members 107a-c. However, it is conceivable to use more than three wing members 107a-c. Each wing member has an airfoil shaped cross-section as seen in a plane transverse to the longitudinal extension L. The wind turbine rotor blade 104 comprises a plurality of sections S1, S2, S3, S4. In this context it may be noted that the number of sections may be different than four, such as less than four or more than four. It is preferred that the number of sections are the same in all rotor blades.

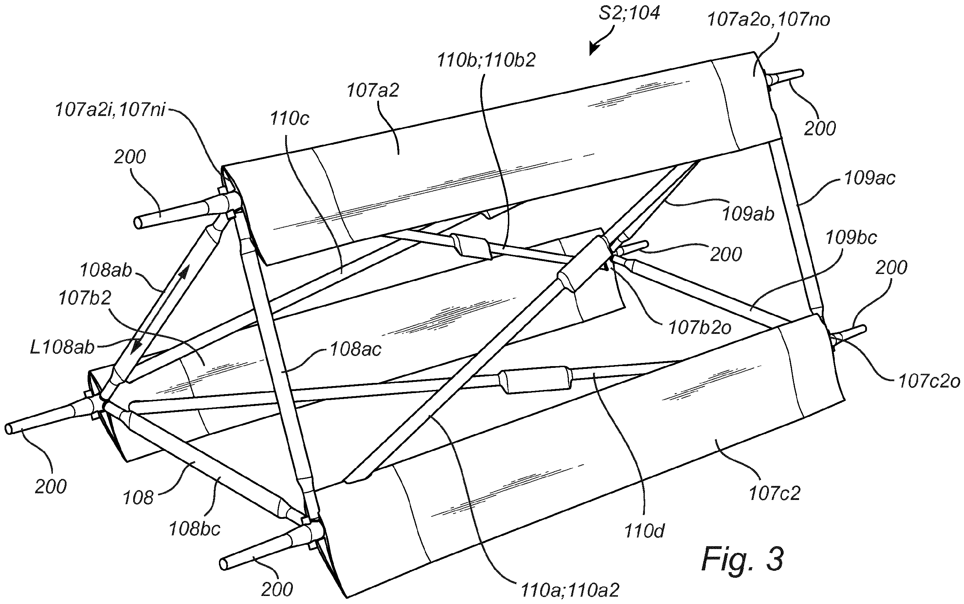

Now turning specifically to Fig. 3, there is shown one embodiment of a section S2 of a wind turbine rotor blade 104. The section S2 comprises three or more wing members 107a2, 107b2, 107c2 extending along each other. Any wing member forming part of the wing 107a will generally be denoted 107an unless there is a need to differentiate which section it is referred to. Likewise, will 107bn and 107cn be used as general reference for any wing member of wing 107b and 107c, respectively. In case there is no need to make a distinction between the wings 107a-c, we will use the notion 107 as a general notion. Thus, for any wing member of any wing we will use the notion 107n.

Each wing member 107 extends from a respective inner end 107ni to a respective outer end 107no.

In the disclosed embodiment, the section S2 further comprises a first plurality of three struts 108ab, 108bc, 108ac each extending from an inner end 107ni of one wing member 107n to an inner end 107ni of another wing member 107n, such that the struts 108 in the first plurality of struts interconnect the wing members 107n at their inner ends 107ni. The struts 108ab, 108bc, 108ac will be denoted struts 108 when there is no need to differentiate between them.

The section further comprises a second plurality of three struts 109ab, 109bc, 109ac each extending from an outer end 107no of one wing member 107n to an outer end 107no of another wing member 107n, such that the struts 109 in the second plurality of struts interconnect the wing members 107n at their outer ends 107no. The struts 109ab, 109bc, 109ac will be denoted struts 109 when there is no need to differentiate between them.

As shown in Fig. 3, the struts 108, 109 may have an aero dynamical cross-sectional shape. The shape may be designed to minimize any wind resistance. The shape may be designed as an airfoil.

The struts 108, 109 may as disclosed in Fig. 3 be provided as separate members.

The wing members 107a, 107b, 107c are along their respective length divided into discrete wing members 107n which extend along the length of the respective section, S1-S4.

As is best seen in Fig. 2, the sections S1-S4 are arranged with their respective wing members 107n generally aligned with the wing members 107n of the neighbouring sections one after another along the longitudinal direction L of the wind turbine rotor blade 104. Moreover, the second plurality of struts 109 of a first section also forms the first plurality of struts 108 of a second section being immediately adjacent the first section as seen in the longitudinal direction L of the wind turbine rotor blade. Accordingly, a set of a plurality of struts is arranged at every transition from one section to another section. For instance, if the wind turbine rotor blade is formed of four sections arranged one after the other along the longitudinal direction of the wind turbine rotor blade, as is disclosed in Fig. 2, there will be a first set of a plurality of struts in the transition between the first and second section, a second set of a plurality of struts in the transition between the second and third section and a third set of a plurality of struts in the transition between the third and fourth section.

It may be noted that at the connection between the inner most section closest to the hub and the hub 106 it is conceivable to use a plurality of struts and it is also conceivable to use a truncated pyramid shaped member 300 (as shown in Fig. 2) interconnecting the wing members at the end facing the hub 106 and connecting the wind turbine rotor blade 104 to the hub 106.

At the outer most end of the wind turbine rotor blade it is conceivable to use a plurality of struts and it is also conceivable to use another kind of member, such as a plate or the like, interconnecting the outer ends of the wing members. It may be advantageous to use a single member at the outer most end, the single member having internal rigidity in the plane formed by the ends of the wing members.

The number of struts in the first plurality and the second plurality of struts 108, 109 respectively may be at least equal to, and preferably is equal to, the number of wing members 104. Thereby it is possible to secure that every wing member is connected to at least two other wing members. It is conceivable to use for instance five or six struts in case there is four wing members. Four struts forming a four-sided polygon and one or more struts extending diagonally inside the polygon. However, in the preferred embodiment there is three wing members and three struts in each of the first and second plurality of struts.

The struts 108, 109 may be configured to resist longitudinal compression along a longitudinal direction of respective strut 108, 109. In Fig.3, the longitudinal direction L108ab is indicated for the strut 108ab. The longitudinal direction of respective strut 108, 109 is essentially extending from the inner end 107ni of a first wing member to the inner end 107ni of another wing member or an outer end 107no of a first wing member to the outer end 107no of another wing member. In practice the actual connection points may be slightly offset the ends 107ni, 107no along the longitudinal direction L of the rotor blade.

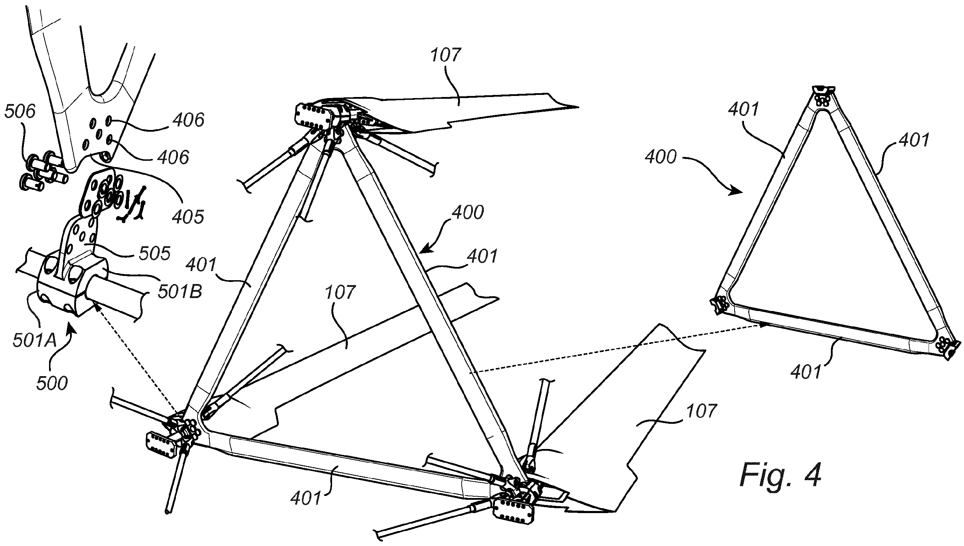

Now turning to Fig. 4, as an alternative to using struts, the struts may be replaced by a frame 400. The frame 400 may be formed as a unitary structure where the number of legs 401 in the frame 400 corresponds to the number of struts. By way of example, a triangular frame 400 with three legs 401 may replace three separate struts. In the disclosed embodiment, the frame 400 is formed as a single polygonal member. The frame 400 is at its respective corner provided with a set of a plurality of through-going holes 406 which pass through a hollow interior 405 of the respective corner of the frame 400. Also shown in Fig. 4 is one embodiment of a connector 500 configured to connect the frame 400 to the wing members 107. The connector 500 will be described further later in the application.

Now turning to Figs. 2 and 3 anew, each section S1-S4 further comprises at least one diagonal frame member 110a-d extending from an inner end 107ni of a first wing member 107n to an outer end 107no of another wing member 107n. As shown in Fig. 3, there is e.g. one diagonal frame member 110a extending from the inner end 107c2i of the wing member 107c2 to an outer end 107a2o of the wing member 107a2. From the inner end 107a2i there is also a second diagonal frame member 110b extending to the outer end 107b2o. From the inner end 107b2i there are two diagonal frame member 110c, 110d extending to an outer end of the two wing members, namely to the outer end 107a2o and the other end 107c2o, respectively. It may be noted from Fig. 2, that at a corner, such as corner 107b2i, at which there are one diagonal frame member 110a1 from a first section S1, there may preferably be two diagonal frame members 110a2, 110b2 extending diagonally in the second section S2.

The diagonal frame members 110a-d may be pre-tensioned providing a pulling force between the inner end of the first wing member to the outer end of the other wing member. Preferably the pre-tension is such that there will be a remaining pre-tension in all the diagonal frame members for any deformation up to the dimensioning loads. Thereby a truss-like frame structure is formed which will be securely held together for any load up to the dimensioning load.

As shown in Fig. 3, the diagonal frame members 110a-d may have an aero dynamical cross-sectional shape. The shape may be designed as an airfoil.

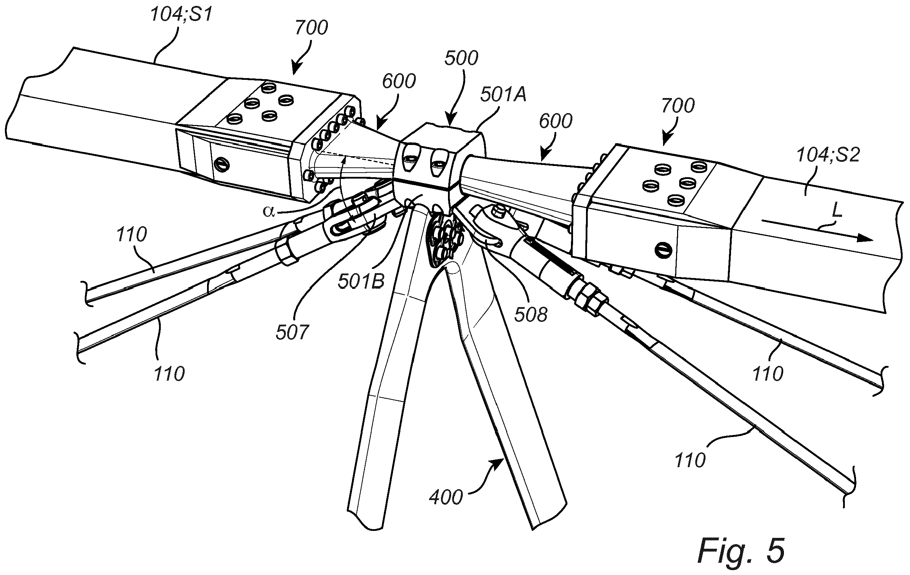

Now turning to Fig. 5, a general overview of one embodiment of a system to be used when interconnecting wing members of adjacent sections will be disclosed. To ease understanding, any air foils of the wing members have been omitted.

In the disclosed embodiment, the system comprises a first interconnecting member 600 which is configured to lockingly engage a free end of a wing member 107 of a first section S1, and a second interconnecting member 600 which is configured to lockingly engage a free end of a wing member 107 of a second, adjacent section S2. The two interconnecting members 600 are connected by a connector 500. The two wing members 107 of the first and second sections S1, S2 are aligned along the longitudinal extension L of the wind turbine rotor blade. Further, the first and second interconnecting members 600 are connected to the respective wing member 107 by using a coupling arrangement 700 to be described in detailed below.

As is best seen in Fig. 1, the system is applied between each set of wing members 107 in two subsequent sections S1-S4. Thus in the event the wind turbine blade 104 is composed of a plurality of sections S1-S4, each having three wing members 107 extending along each other, at a distance from each other, and along the longitudinal direction L of the wind turbine rotor blade 104, three connectors 500 are used to interconnect two adjacent sections S1-S2; S2-S3; S3-S4.

Now turning to Figs. 4 and 5, the connector 500 is designed as two halves 501A, 501B which are bolted together to thereby lockingly engage a free end of the first interconnecting member 600 and a free end of the second adjacent interconnecting member 600. The halves 501A, 501B are preferably formed by metal.

The half 501B of the connector 500 that is configured to face a longitudinal centreline LC of the wing turbine rotor blade 104 comprises in the embodiment disclosed in Fig. 5 three lugs 505, 507, 508 while the embodiment in Fig. 4 only discloses one lug 505. The lugs 505; 507 may be integrally formed, e.g. by casting, with the specific half of the connection member. Alternatively, the lugs may be connected thereto e.g. by welding or bolting.

The first lug 505, best seen in Fig. 4 extends substantially transverse to the longitudinal extension L of the wing turbine rotor blade 104. The first lug 505 is dimensioned such that it is suitable for insertion into the interior 405 of the frame 400. The lug 505 is also provided with a set of through-going holes. The connector 500 may be secured to the frame 400 by inserting the lug 505 into the interior 405, and inserting bolts or rivets 506 through the through-going holes of both the lug 505 and the interior 405 of the frame 400. Also pictured is a slip disc, washers and pins - the skilled person understands how and when to use such connection details appropriately. The frame 400 is formed as a triangular frame. Each leg 401 of the frame 400 is configured to extend between two wing members 107 extending along each other, at a distance from each other, and along a longitudinal direction of the wind turbine rotor blade. It is to be understood that the frame with remained function may be replace by struts 108; 109.

In the embodiment disclosed in Fig. 5, the connector 500 comprises second and third lugs 507, 508 each extending with an angle α to the longitudinal extension L of the wing turbine rotor blade. The second lug 507 is configured to connect to one or more diagonal frame members 110 forming part of the first section S1. The third lug 508 is configured to connect to one or more diagonal frame members 110 forming part of the second section S2. The angle α of the respective second and third lug 507, 508 preferably corresponds to the angle of the respective diagonal frame member 110. The diagonal frame members 110 may be connected to the second and third lugs 507, 508 e.g. by bolting.

It is to be understood that one or both of the second and third lugs 507, 508 may be omitted. This may by way of example be the case if one or both of the sections S1, S2 to be interconnected should be designed without any diagonal frame members 110, or if the diagonal frame members 110 should be connected in other ways. The number of lugs 507, 508 may be adapted to the number of diagonal frame members 110. One lug may 507, 508 be used to engage more than one diagonal frame member 110. Further, it is to be understood that other connection means than lugs and/or bolts may be used with remained function.

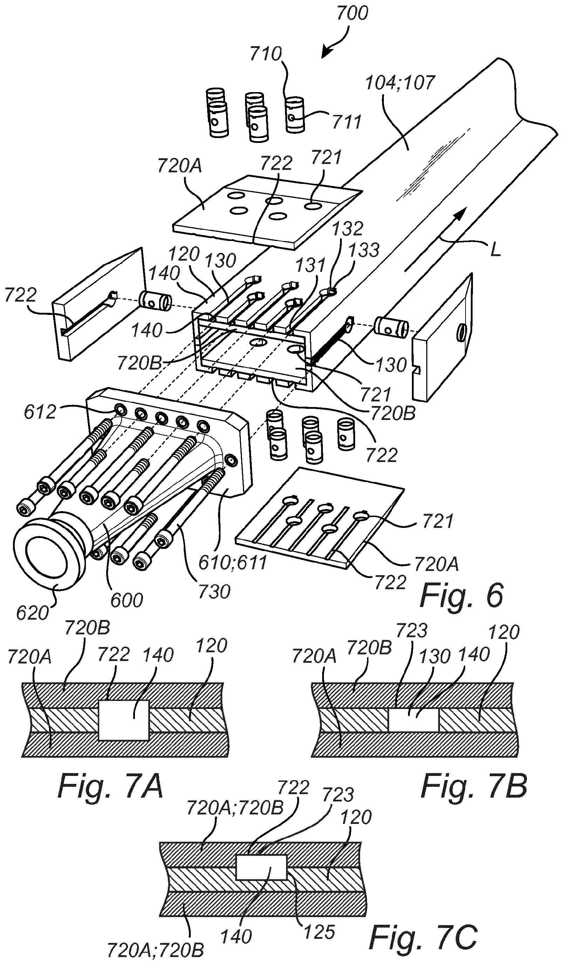

Now turning to Fig. 6, one embodiment of the coupling arrangement 700 is disclosed in an exploded view. The coupling arrangement 700 is configured for connecting a wing member 107 of a wind turbine rotor blade 104 to an interconnecting member 600.

The wing member 107, only a part thereof is disclosed, comprises at a free end thereof, a tubular end portion 120. At least the tubular end portion 120 may be made of a fiber reinforced polymer based material. It is to be understood that it with remained function may be made of metal, such as steel. The tubular end portion 120 is disclosed as having a rectangular cross section. Other cross sections are possible with remained function, such as quadrangular, circular or oval.

The long sides of the tubular end portion 120 are provided with a plurality of straight slots 130 extending along the longitudinal extension L of the wing member. Further, in the disclosed embodiment the short sides of the tubular end portion 120 are provided with corresponding slots 130. Each slot 130 has a mouth 131 at the free edge of the tubular end portion 120. Further, each slot 130 has a closed end 132. The closed end 132 is provided with a locally enlarged width thereby forming a through-going hole 133 extending transverse the longitudinal extension L of the wing member 107. The through-going hole 133 is configured to receive an anchoring member 710 to be discussed below.

In the disclosed embodiment the slots 130 extend through the full thickness of the walls of the tubular end portion 120. Also, the slots 130 may have a uniform width along the full thickness of the walls of the tubular end portion 120. The width of the slots 130 slightly exceeds the diameter of bolts 730 to be inserted there through.

In the disclosed embodiment, slots 130 are arranged on opposite wall portions of the tubular end portion 120, i.e. on the opposite long sides and on the opposite short sides. It is preferred that slots 130 are arranged on at least two opposing side wall portions of the tubular end portion 120. In the event of a rectangular cross section, it is preferred that the slots 130 are arranged at least on the long sides.

The plurality of slots 130 form part of longitudinally extending channels 140, each channel 140 extending from the free end of the tubular end portion 120 to a respective receiving hole 711 of the respective anchoring member 710.

The coupling arrangement 700 further comprises inner and outer support members 720A, 720B. The inner support members 720B are arranged to abut an inner surface of the tubular end portion 120. The outer support members 720A are arranged to abut an outer surface of the tubular end portion 120 of the wing member 107.

The inner and the outer support members 720A, 720B have a longitudinal extension, coinciding with the longitudinal extension L of the wing member 107, and a transversal extension. The inner support member 720B and the outer support member 720A preferably each have a surface extension corresponding to at least a portion of a surface extension 121 of the tubular end portion 120. In the disclosed embodiment where the tubular end portion 120 has a rectangular cross section, this is achieved by the inner and outer support members 720A, 720B being formed as flat plates. The inner and outer support members 720A, 720B are preferably attached thereto by adhesive bonding. Alternatively, they may loosely abut the respective wall of the tubular end portion 120.

The inner support member 720B and the outer support member 720A are preferably made of a fiber reinforced polymer based material. The provision of a strong adhesive bonding may be facilitated by using one and the same polymer based material in the tubular end portion 120 as in the inner and outer support members 720A, 720B. Alternatively, it is preferred that the polymer based material used in the tubular end portion 120 is chemically compatible with the polymer based material used in the inner and outer support members 720A, 720B. In case of the tubular end portion and the inner and outer support members instead are made of a metal, they may be joined by welding.

The inner and outer support members 720A, 720B are each provided with a pattern of through-going holes 721 complementary to the pattern of through-going holes 133 in the respective wall portion of the tubular end portion 120.

In the disclosed embodiment, both the inner and outer support members 720A, 720B comprise longitudinally extending grooves 722 compatible with the slots 130 in the tubular end portion 120 of the wing member 107. The grooves 722 are arranged in the longitudinally extending wall portions and hence the surfaces configured to abut the respective inner or outer walls of the tubular end portion 120. When the inner and outer support members 720A, 720B are arranged to abut the respective inner or outer wall of the tubular end portion 120, the grooves 722 in the surfaces of the inner and outer support members 720A, 720B, together with the slots 130 in the wall of the tubular end portion 120 will thereby define the longitudinally extending channels 140. Each channel 140 will have a mouth 131 in the free edge of the tubular end portion 120.

In the disclosed embodiment where both the inner and outer support member 720A, 720B comprises grooves 722, each longitudinally extending channel 140 will comprise an inner envelope surface 723 which is defined by a slot 130 in the tubular end portion 120 of the wing member, by the longitudinally extending wall portion of the groove 720 in the outer support member 720A and by the longitudinally extending wall portion of the inner support member 720B, see Fig 7A.

Other alternative extensions of the longitudinally channels are possible. By way of example, see Fig. 7B, the inner and outer support members 720A, 720B may be arranged without any grooves. In such embodiment, the inner envelope surface 723 of the respective channel 140 will be defined by the slot 130 in the longitudinally extending wall portion of the tubular end portion 120 only.

In another embodiment, see Fig 7C only one of the inner and outer support members 720A, 720B is provided with a groove 722. In such embodiment, the longitudinally extending channel 140 will partly be defined by a groove 125 in a longitudinally extending exterior wall portion of the tubular end portion 120 and partly defined by a groove 722 in the longitudinally extending wall portion of either the inner support member 720B or the outer support member 720A.

Accordingly, each longitudinally extending channel may be defined by the material in the tubular end portion 120 only, or by a combination of the material in the tubular end portion 120 and the material in one or both of the inner and outer support members 720A, 720B. No matter how the channels 140 are formed, it is preferred that the cross sections of the channels 140 exceed the cross sections of the receiving holes 711 of the anchoring members 710 and also exceed the cross sections of bolts 730 to be inserted into and to extend through the channels 140. Thereby there will be no transfer of load from the bolts 730 in the transverse direction along the channels 140 but rather the load will be transferred to the anchoring members 710. The geometrical cross section of the channels 140 may be arbitrary.

The coupling arrangement 700 further comprises a plurality of anchoring members 710. Each anchoring member 710 is arranged to extend in a direction transverse to the longitudinal direction L of the wing member 107, through a respective through-going hole 721 extending through the outer support member 720A, through the wall of the tubular end portion 120 and through the inner support member 720B. Each anchoring member 710 is provided with a receiving hole 711 having a longitudinal extension aligned with the longitudinal extension L of the wing member 107 and facing the free end of the wing member 107. Thereby the receiving hole 711 will be aligned with the respective slot 130 or channel 140 in the wall of the tubular end portion 120. The receiving holes 711 are preferably threaded to allow to lockingly engage the bolts 730.

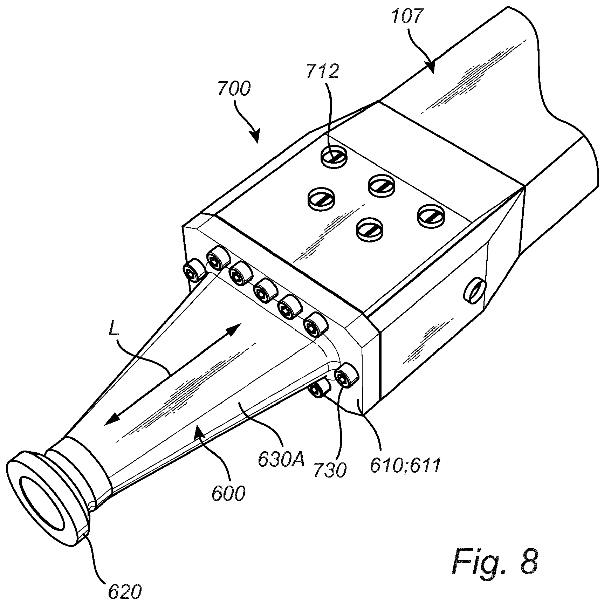

Each anchoring member 710 may, in its free end that is configured to face away from the wing member 107 in a condition when the anchoring member 710 is inserted into the tubular end portion 120, be provided with a setting arrangement 712, such as a longitudinal slot. Thereby the anchoring member 710 may easily be oriented, e.g. by using a screw driver, so that the receiving hole 711 is correctly aligned with the longitudinally extending channel 140 in the tubular end portion 120. The setting arrangement 712 is best seen in Fig. 8 which discloses the assembly of a wing member 107 being connected to an interconnecting member 600 by means of the coupling arrangement 700.

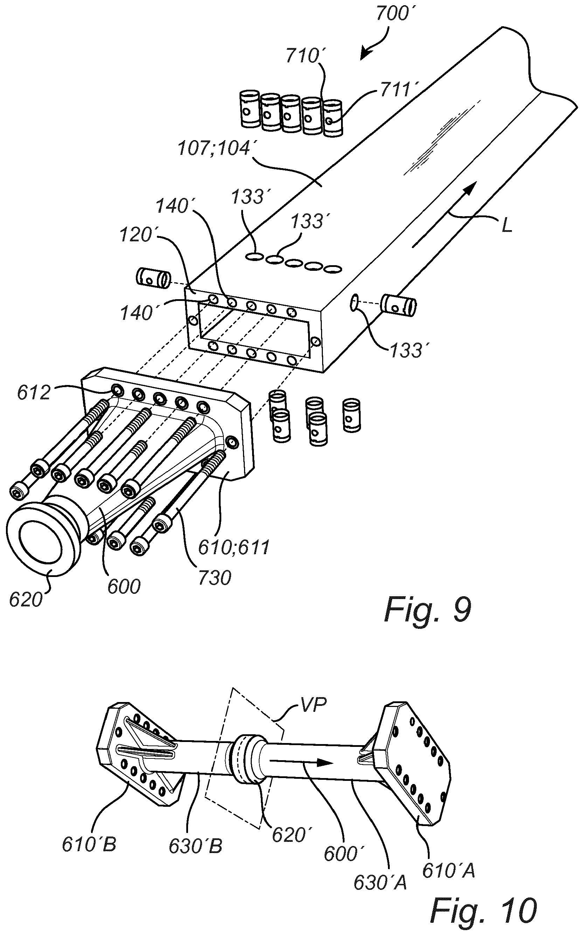

Now turning to Fig. 9, an alternative solution of the coupling arrangement 700' is disclosed. The coupling arrangement 700' may be used for connecting a wing member 107' of a wind turbine rotor blade 104' to an interconnecting member 600. This embodiment is suitable, especially when at least the end portion of the wing member 107' is made of a metal material. The coupling arrangement 700' differs from that discussed above in the way the longitudinally extending channels 140' are provided. The free end of the tubular end portion 120' is provided with a plurality of longitudinally extending channels 140'. Each channel 140' extends from the free end of the wing member 107' to a respective receiving hole 711' of an anchoring member 710'. The longitudinally extending channels 140' are preferably provided as bores that are drilled or otherwise formed in the material of the tubular end portion 120'.

A plurality of through-going holes 133' are arranged in the walls. Each hole 133' extends through a wall of the tubular end portion 120'. Each through-going hole 133' crosses a respective longitudinally extending channel 140'. An anchoring member 710' is configured to be inserted into a respective through-going hole 133'. Each anchoring member 710' is provided with a receiving hole 711' having a longitudinal extension aligned with the longitudinal extension L of the wing member 107' and facing the free end of the wing member 107'. It is preferred that the cross sections of the channels 140' exceed the cross sections of the receiving holes 711' of the anchoring members 710' and also exceed the cross sections of bolts 730 to be inserted into and to extend through the channels 140'.

Now turning to Figs 6, 8 and 9 one embodiment of the interconnecting member 600 is disclosed. The interconnecting member 600 has a longitudinal extension coinciding with the longitudinal extension L of the wing member 107.

The interconnecting member 600 comprises in a first end thereof a connecting portion 610 having an extension transverse the longitudinal extension L of the wing member 107. The connecting portion 610 has the form of a flange 611 which comprises a plurality of through-going holes 612. Each hole 612 has a longitudinal extension aligned with a respective receiving hole 711 in the anchoring members 710.

The interconnecting member 600 is configured to be mounted to the free end of the tubular end portion 120 of the wing member 107. The mounting is made by bolting. The bolts 730 are inserted into the respective through-going channels 140 forming part of the coupling arrangement 700. Each bolt 730 is configured to extend from the connecting portion 610, through a respective longitudinally extending channel 140 and into a locking engagement with the respective receiving hole 711 in the anchoring members 710.

The interconnecting member 600 comprises, in a second end thereof, an engagement portion 620 configured to lockingly interact with the connector 500, see e.g. Fig. 5. In the disclosed embodiment, the engagement portion 620 is formed as a bulge having an extension transverse the longitudinal extension L of the wing member 107. The engagement portion 620 may in principle have any arbitrary geometry.

An elongated portion 630A extends between the engagement portion 620 and the connecting portion 610. In the disclosed embodiment the elongated portion 630A has the form of a truncated cone, although it is to be understood that other geometries are possible. The elongated portion 630A may have the shape of an airfoil.

The interconnecting member 600 may be hollow or solid. The interconnecting member 600 may be formed of a fibre reinforced polymer based material or a metal.

Now turning to Fig. 10, a second embodiment of an interconnecting member 600' is disclosed. The interconnecting member 600', having generally the same design and function as that previously disclosed, differs in that the interconnecting member 600' has a mirrored configuration extending on an opposite side of a virtual plane VP extending through the engagement portion 620' and transverse to the longitudinal extension L of the wing member (not disclosed). Thereby, the interconnecting member 600' has an elongated geometry with one connecting portion 610'A, 610'B on each side of a single engagement portion 620'. The connecting portions 610'A, 610'B are connected to the engagement portion 620' via respective elongated portions 630'A, 630'B. In use (not disclosed), one of the connecting portions 610'A may be connected to a wing member of a first section whereas the other connecting portion 610'B may be connected to a wing member of a second section. The two connecting portions 610'A, 610'B may be rotated in view of each other along the virtual plane VP.

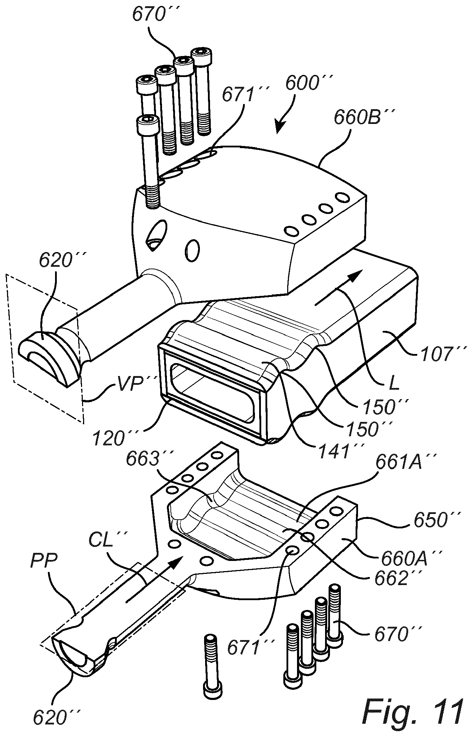

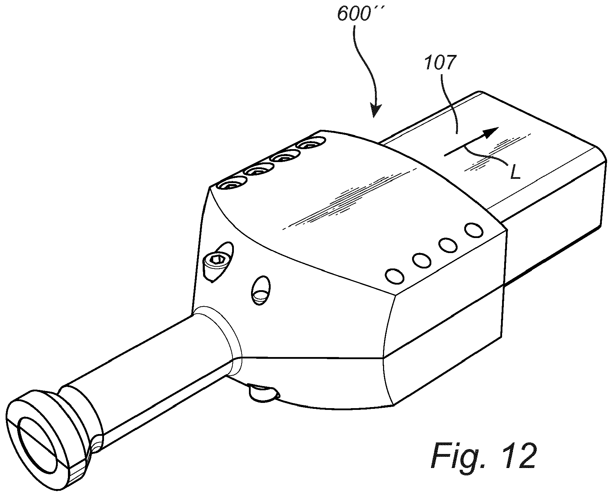

Now turning to Figs. 11 and 12, a third embodiment for connecting a wing member 107" of a wind turbine rotor blade to an interconnecting member 600" is disclosed. Only a part of the interconnecting member 600" is disclosed.

The wing member 107" has a longitudinal extension L and comprises an end portion 120" having, as seen along the longitudinal extension, a plurality of undulations 150". The undulations 150" extend transverse the longitudinal extension L of the wing member 107". The undulations 150" may be non-rotation-symmetrical or rotation-symmetrical. In the disclosed embodiment, the end portion 120" has a rectangular, hollow cross section. It is to be understood the end portion 120" with remained function may have a solid cross section. Further, other cross-sections, such as round or oval may be used.

The undulations 150" are arranged at least on the outer surfaces of the two opposing long sides of the end portion 120". The undulations 150" may be arranged along the other two opposing sides or on all sides. It is to be understood that the end portion 120" with remained function may have any non-rotation-symmetrical or rotation-symmetrical cross-sectional area being locally reduced or locally enlarged. In this context the cross-sectional area is delimited by the outer perimeter of the walls of the end portion 120".

At least the free end 650" of the interconnecting member 600" is divided into two halves 660A"; 660B" with a partition plane PP extending along a longitudinal centre line CL of the interconnecting member 600". The first half 660A" comprises a first recess 661A"and the second half 660B" comprises a second recess (not disclosed). The two halves 660A", 660B" are configured to be moved together into a position where the first and second recesses are arranged to encircle at least a portion of the end portion 120" of the wing member 107" thereby forming a connection. The first and second recesses 661A" together define a cavity with an inner wall portion 662" being, as seen along the longitudinal extension, complementary to an outer wall portion 141" of the end portion 120" of the wing member 107". In the disclosed embodiment, the inner wall portion 662" comprises an undulation 663" complementary to the undulation 150" on the end portion 120" of the wing member 107". The wing member 107" is thereby prevented from being separated from the interconnecting member 600" along the longitudinal direction L of the wing member 107".

The two halves 660A", 660B" are bolted together by a plurality of bolts 670" extending through a plurality of through-going holes 671" in the respective halves 660A", 660B". All bolts 670" may be arranged from one and the same direction. Alternatively, as is disclosed, a first set of bolts 670" arranged on one side of the longitudinal extension L of the wing member 107" may be arranged from one direction, while a second set of bolts 670" arranged on an opposite side of the longitudinal extension L of the wing member 107" may be arranged from the opposite direction.

The end portion 120" of the wing member 107" may be made of a fibre reinforced polymer based material or metal such as steel. The interconnecting member 600" is preferably made of metal.

The interconnecting member 600" comprises an engagement portion 620" having the same function as that previously discussed in view of e.g. Figs. 5 and 6. Like the second embodiment described above with reference to Fig. 10, the interconnection member 600" may have a non-disclosed mirrored configuration extending on an opposite side of a virtual plane VP", said virtual plane extending through the engagement portion and transverse to the longitudinal extension L of the wing member 107". Thereby, the interconnecting member has an elongated geometry with recesses on each side of a common engagement portion. One of the connecting portions may be configured to be connected to a wing member of a first section whereas the other connecting portion may be configured to be connected to a wing member of a second section.

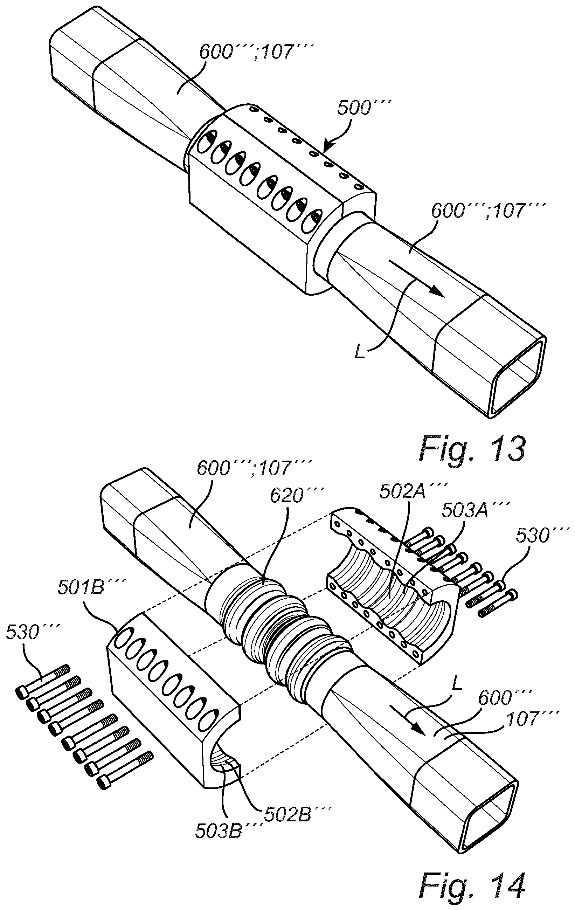

Now turning to Figs. 13 and 14, one example of a connector 500'" to be used to encircle an engagement portion 620'" is disclosed. The engagement portion 620'" may by way of example be arranged on a free end of an interconnecting member to be connected to an end portion of a wing member. Alternatively, the engagement portion 620'" may be arranged on a single interconnecting member of the type disclosed in Fig. 10 which is configured to be connected via its opposing free ends two end portions of two wing members 107"'. As yet another example, the engagement portion 620'" may be arranged along the longitudinal extension of a wing member to thereby allow connection of one or more struts or frame members to the wing member along the longitudinal extension of the wing member. The connector 500'" may be provided with one or more lugs (not disclosed). The lugs may have the same or corresponding design and function as the lugs previously discussed in view of Figs 4 and 5.

The connector 500'" is divided into two halves 501A"'; 501B"', each having a recess 502A"'; 502B'" being complementary to the geometry of the engagement portion 620'" to be encircled.

The two halves 501A"'; 501B"' are configured to be moved together into a position where the first and second recesses 502A'"; 502B"' are arranged to encircle at least a portion of the engagement portion 620'" thereby forming a connecting portion. The first and second recesses 502A"'; 502B'" together define a cavity with an inner wall portion 503A"'; 503B'" being, as seen along the longitudinal extension, complementary to the engagement portion 620"'. In the event the connector 500'" is used to interconnect two wing members 107"', the wing members 107'" are thereby prevented from being separated from the interconnecting member 500'" along the longitudinal direction L of the wing members 107"'.

The two halves 501A"'; 501B'" are bolted together by a plurality of bolts 530'" extending through a plurality of through-going holes 540'" in the respective halves 501A"'; 501B"'. All bolts 530'" may be arranged from one and the same direction. Alternatively, a first set of bolts 530'" arranged on one side of the longitudinal extension L of the wing member may be arranged from one direction, while a second set of bolts arranged on an opposite side of the longitudinal extension of the wing member may be arranged from the opposite direction. It is to be understood that the number of bolts may be different than that disclosed.

No matter design of the connector 500"', it may be provided with one or more lugs (not disclosed). The lugs may have the same or corresponding design and function as the lugs previously discussed in view of Figs 4 and 5.

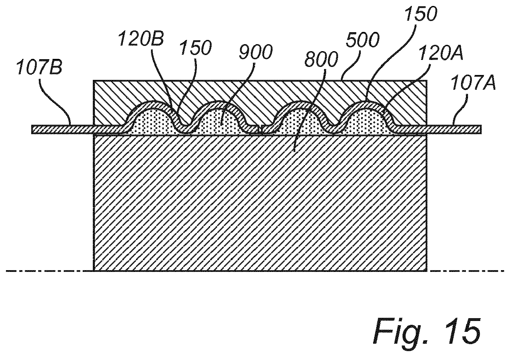

Now turning to Fig. 15, a cross section of a connector 500 interconnecting the tubular end portions 120A, 120B of two wing members 107A, 107B is schematically disclosed. The connector 500 is highly schematically disclosed. The tubular end portions 120A, 120B are provided with a circular cross section. Also, the walls of the tubular end portions 120A, 120B are provided with undulations 150. To avoid buckling of the wall portions as a result of the connector 500 clamping around the outer walls, an inner reinforcement 800 may be provided along the tubular end portions 120A, 20B of the respective wing members 107A, 107B. In the disclosed embodiment, an optional filler material 900 is arranged in the interspace between the inner reinforcement 800 and the tubular end portions 120A, 120B. The filler 900 may by way of example be epoxy.

The end portion of the wing member has been described as having a tubular quadrangular cross section. It is to be understood that other cross sections are equally applicable with remained function.

The application as a whole has disclosed a bolted connection between the free end of the wing member and the interconnecting member. It is to be understood that the bolts and channels may be omitted and instead the wing member and the interconnecting member may be joined by welding.

The coupling arrangements have been exemplified above as being arranged on a tubular end portion having a rectangular cross section. It is to be understood that the coupling arrangement is equally applicable also to other cross sections, such as a quadrangular, circular or oval cross section.

## Claims

1. A coupling arrangement (700) for connecting a wing member (107) of a wind turbine rotor blade (104) to an interconnecting member (600), the wing member (107) having a longitudinal extension L and the wing member (107) comprising, at a free end thereof, a tubular end portion (120), and wherein the coupling arrangement (700) comprises:
a plurality of through-going holes (721, 133), each hole extending through a wall of the tubular end portion (120);
a plurality of anchoring members (710), each being arranged to extend through a respective through-going hole (721, 133), and each being provided with a receiving hole (711) having a longitudinal extension aligned with the longitudinal extension L of the wing member (107) and facing the free end of the wing member (107); and
a plurality of longitudinally extending channels (140), each channel extending from the free end of the wing member (107) to a respective receiving hole (711).

2. A coupling arrangement (700) according to claim 1, wherein the coupling arrangement (700) further comprises:
an inner support member (720B) having a longitudinal extension, coinciding with the longitudinal extension L of the wing member (107), and a transversal extension, and being arranged to abut an inner surface of the tubular end portion (120) of the wing member (107);
an outer support member (720A) having a longitudinal extension, coinciding with the longitudinal extension L of the wing member (107), and a transversal extension, and being arranged to abut an outer surface of the tubular end portion (120) of the wing member (107); wherein
each hole of the plurality of through-going holes (721, 133) extends through the outer support member (720A), the wall of the tubular end portion (120) and the inner support member (720B).

3. A coupling arrangement according to claim 1 or 2, wherein each longitudinally extending channel (144) comprises an inner envelope surface (723), wherein the inner envelope surface (723) is:
defined by the material in the wall of the tubular end portion (120);
defined by a slot (130) in a longitudinally extending wall portion of the tubular end portion (120); or
defined partly by a groove (125) in the longitudinally extending exterior or inner wall portion of the tubular end portion (120) and partly defined by a groove (722) in the longitudinally extending wall portion of either the outer support member (720A) or the inner support member (720B); or
defined by a slot (130) in the longitudinally extending wall portion of the tubular end portion (120), by a groove (722) in the longitudinally extending wall portion of the outer support member (720A) and by a longitudinally extending wall portion of the inner support member (720B).

4. A coupling arrangement according to any of claims 2-3, wherein the tubular end portion (120) is made of a fibre reinforced polymer based material, and wherein each of the inner support member (720B) and the outer support member (720A) is made of a fibre reinforced polymer based material.

5. A coupling arrangement according to any of claims 2-4, wherein each of the inner support member (720B) and the outer support member (720A) is configured to be mounted to the tubular end portion (120) by using an adhesive.

6. A coupling arrangement according to any of the preceding claims, wherein the receiving holes (711) are threaded.

7. A coupling arrangement according to any of the preceding claims, wherein a coupling arrangement (700) is arranged on at least two opposing side wall portions of the tubular end portion (120).

8. A coupling arrangement according to any of claims 2-7, wherein the inner support member (720B) and the outer support member (720A) each have a surface extension complementary to at least a portion of a surface extension of the tubular end portion (120).

9. A system to be used in a wind turbine rotor blade, the system comprising:
a coupling arrangement (700) according to any of claims 1-8;
an interconnecting member (600) comprising a connecting portion (610) having an extension transverse the longitudinal extension L of the wing member (107), and a plurality of through-going holes (612), each hole having a longitudinal extension aligned with a respective receiving hole (711) in the anchoring members (710); and
a plurality of bolts (730), each configured to extend from the connecting portion (610), through a respective longitudinally extending channel (140) and into a locking engagement with the respective receiving hole (711) in the anchoring members (710).

10. A system according to claim 9, wherein there is a radial clearence between the plurality of bolts (730) and the plurality of through-going holes (612) in the connecting portion (610) of the interconnecting member (600), and between the plurality of bolts (730) and the plurality of channels (140) in the coupling arrangement (700), which channels extend from the free end of the wing member (107) to a respective receiving hole (711) in an anchoring member (710).

11. A system according to claim 9 or 10, wherein the interconnecting member (600) is made of metal.

12. A system according to any of claims 9-11, wherein the interconnecting member (600; 600') comprises a first elongated portion (630, 630'A) extending along the longitudinal extension L of the wing member (107), and wherein the connecting portion (610) is arranged at a free end of the first elongated portion (630, 630'A) and wherein the first elongated portion (630, 630'A) at an opposite end thereof comprises an engagement portion (620) configured to directly or indirectly support a connector (500).

13. A system according to claim 12, wherein the interconnecting member (600; 600') further comprises a second elongated portion (630'B) aligned with the first elongated portion (630'A), and wherein a second connecting portion (610B) is arranged at a free end of the second elongated portion (630'B) opposite the first connection portion (610'A), wherein the engagement portion (620') is arranged between the first and the second elongated portion (630'A, 630'B) and wherein the first elongated portion (630'A) is configured to interact with a first wing member (107) and the second elongated portion (630'B) is configured to interact with a second wing member (107).

14. A wind turbine rotor blade (104) comprising a first section (S1) of a wind turbine rotor blade, the first section (S1) comprising
three or more wing members (107) extending along each other, at a distance from each other, and along a longitudinal direction L of the wind turbine rotor blade (104),
wherein at least one, and preferably each, wing member (107) has an airfoil shaped cross-section as seen in a plane transverse to the longitudinal extension L of the wing member (107),
wherein each wing member (107) extends from a respective inner end to a respective outer end, and further comprises a system according to any of claims 9-13 interconnecting the wing member (107) to an associated wing member (107) of a second section (S2) of the wind turbine rotor blade (104).
